(19) Europäisches Patentamt / European Patent Office / Office européen des brevets

(11) **EP 2 002 720 A1**

(12) **EUROPÄISCHE PATENTANMELDUNG**

(43) Veröffentlichungstag:
**17.12.2008  Patentblatt 2008/51**

(51) Int Cl.:
*A01N 37/02* (2006.01)    *A01N 37/42* (2006.01)
*A01N 25/18* (2006.01)    *A01P 1/00* (2006.01)

(21) Anmeldenummer: **08008765.3**

(22) Anmeldetag: **09.05.2008**

(84) Benannte Vertragsstaaten:
**AT BE BG CH CY CZ DE DK EE ES FI FR GB GR
HR HU IE IS IT LI LT LU LV MC MT NL NO PL PT
RO SE SI SK TR**
Benannte Erstreckungsstaaten:
**AL BA MK RS**

(71) Anmelder: **Menno Chemie-Vertrieb GmbH
22850 Norderstedt (DE)**

(72) Erfinder: **Nevermann, Jan
22397 Hamburg (DE)**

(74) Vertreter: **Becker Kurig Straus
Patentanwälte
Bavariastrasse 7
80336 München (DE)**

(54) **Biozide Zusammensetzung basiert auf Ameisensäure**

(57)     Die vorliegende Erfindung bezieht sich auf eine biozide Zusammensetzung, welche Ameisensäure und mindestens 6 Gew.-%, bezogen auf die Ameisensäure, mindestens einer Verbindung V, ausgewählt aus der Gruppe, bestehend aus Glyoxylsäure (OHC-COOH), Thioglyoxylsäure (SHC-COOH), Oxalsäure ($(COOH)_2$) und deren Derivaten enthält. Die Zusammensetzung kann als Biozid in der Landwirtschaft, der Lebensmittelproduktion, der Lebensmittelverarbeitung und im Gartenbau, sowie der Pflanzenproduktion verwendet werden.

**EP 2 002 720 A1**

**Beschreibung**

**Gebiet der Erfindung**

Die vorliegende Erfindung bezieht sich auf eine biozide Zusammensetzung, welche Ameisensäure enthält. Insbesondere bezieht sich die vorliegende Erfindung auf eine Zusammensetzung mit geringem Dampfdruck und geringem Gefrierpunkt.

**Stand der Technik**

Auf dem Gebiet der Landwirtschaft, der Lebensmittelproduktion, der Lebensmittelverarbeitung und des Gartenbaus, sowie der Pflanzenproduktion werden verschiedene Substanzen als Biozide verwendet. Als Biozide werden hierbei Substanzen gemäß der Begriffsbestimmung des Artikels 2 der Richtlinie 98/8/EG vom 16. Februar 1998 verstanden. Unter anderem wurden wässrige Lösungen, die Ameisensäure enthalten mit Erfolg eingesetzt.

Da Ameisensäure einen hohen Dampfdruck besitzt lassen es die ständig steigenden Anforderungen an den Arbeitsschutz jedoch fraglich erscheinen, ob der Einsatz von Ameisensäure auch in Zukunft in Übereinstimmung mit den dann geltenden Arbeitsschutzvorschriften möglich sein wird.

Weiterhin besteht aufgrund des Klimawandels zunehmend der Bedarf, Biozide auch im Winter im Freiland einzusetzen. Hierzu sind derzeit bekannte Mittel die Ameisensäure enthalten auf Grund ihres hohen Gefrierpunkts jedoch ungeeignet.

**Beschreibung der Erfindung**

Es ist daher Aufgabe der vorliegenden Erfindung, eine Zusammensetzung bereitzustellen, welche Ameisensäure enthält, wobei der Dampfdruck der Ameisensäure gegenüber herkömmlichen Zusammensetzungen, die Ameisensäure enthalten erniedrigt ist. Weiterhin ist es Aufgabe der vorliegenden Erfindung eine Zusammensetzung bereitzustellen, deren Gefrierpunkt gegenüber herkömmlichen Zusammensetzungen, die Ameisensäure enthalten, erniedrigt ist.

Diese Aufgabe wird erfindungsgemäß durch eine Zusammensetzung gelöst, welche Ameisensäure und mindestens 6 Gew.-%, bezogen auf die Ameisensäure, mindestens einer Verbindung V, ausgewählt aus der Gruppe, bestehend aus Glyoxylsäure (OHC-COOH), Thioglyoxylsäure (SHC-COOH), Oxalsäure ((COOH)$_2$), deren Derivaten (OR$^1$C-COOR$^2$, SR$^1$C-COOR$^2$, R$^1$OOC-COOR$^2$) und Gemischen daraus enthält. Hierbei sind R$^1$ und R$^2$ unabhängig voneinander aus der Gruppe, bestehend aus Wasserstoff, Halogenid, Alkyl, Heteroalkyl, Aryl und Heteroaryl, ausgewählt. Die Zusammensetzung enthält gegebenenfalls weitere Lösungsmittel und übliche Zusatz- und Hilfsmittel. Hierbei kann es sich beispielsweise um Alkohole, Tenside oder Stabilisatoren handeln.

Bei dem Lösungsmittel handelt es sich bevorzugt um Wasser. Bei den weiteren üblichen Hilfs- und Zusatzmitteln kann es sich beispielsweise um Alkohole oder Tenside handeln. Um den unangenehmen Geruch der Ameisensäure zu überdecken, kann die erfindungsgemäße Zusammensetzung zudem wenigstens einen Zitrusfruchtsaft oder ein Zitrusfruchtsaftkonzentrat oder Gemische von Zitrusfruchtsäften oder Zitrusfruchtsaftkonzentraten aus der Familie der Rutaceae als Duftstoff enthalten.

Die Zusammensetzung enthält bevorzugt mindestens 8 Gew.-%, besonders bevorzugt mindestens 10 Gew.-% und ganz besonders bevorzugt mindestens 12 Gew.-%, bezogen auf die Ameisensäure, der Verbindung V.

Die Verbindung V bewirkt gemäß dem Raolt'schen Gesetz der Dampfdruckerniedrigung eine Verringerung des Dampfdrucks der Ameisensäure (siehe Formel I):

$$P = P_0 \cdot x(\text{Ameisensäure}) \qquad (I)$$

Hierbei ist P der partielle Dampfdruck in hPa, $P_0$ ist der Dampfdruck der Ameisensäure in hPa und x(Ameisensäure) ist der Stoffmengenanteil der Ameisensäure in der Zusammensetzung (Molenbruch).

Weiterhin bewirkt die Verbindung V gemäß dem Raolt'schen Gesetz der Gefrierpunktserniedrigung eine Verringerung des Gefrierpunkts der Ameisensäure (siehe Formel II):

$$\Delta T = K_m \cdot b(X) \qquad\qquad (II)$$

Hierbei ist $\Delta T$ die Temperaturdifferenz in Kelvin, $K_m$ ist die kryostatische Konstante der Ameisensäure und b(X) ist die Molalität der gelösten Komponenten in mol/kg Lösungsmittel.

Bei der Verbindung V handelt es sich bevorzugt um Glyoxylsäure oder eines ihrer Derivate. Besonders bevorzugt handelt es sich um Glyoxylsäure.

Für die erfindungsgemäße Modifizierung herkömmlicher Biozide, die Ameisensäure enthalten, mit dem Ziel den Dampfdruck der Ameisensäure zu senken und den Gefrierpunkt der Zusammensetzung zu senken ist muss eine Verbindung V gefunden werden, die in Ameisensäure hinreichend löslich ist. Während diese Bedingung noch durch eine Vielzahl organischer Säuren erfüllt wird, stellt sich an die Verbindung V die weitere Bedingung, dass es sich nicht um einen Wirkstoff handeln darf. Ein solcher wäre zulassungsbedürftig und würde so zusätzliche Anforderungen an eine Markteinführung der erfindungsgemäßen Zusammensetzung stellen. Glyoxylsäure erfüllt die Bedingung der guten Löslichkeit in Ameisensäure und ist nach Europäischem Recht kein Wirkstoff.

Üblicherweise wird eine erfindungsgemäße Zusammensetzung als Konzentrat mit einem Anteil an 55 Gew.-% Ameisensäure an der Gesamtzusammensetzung bereitgestellt. Dies Konzentrat wird vor der Anwendung auf eine geeignete Konzentration verdünnt, die dem Fachmann von herkömmlichen Zusammensetzungen, die Ameisensäure enthalten, bekannt ist.

Die erfindungsgemäße Zusammensetzung kann als Biozid in der Landwirtschaft, der Lebensmittelproduktion, der Lebensmittelverarbeitung und im Gartenbau, sowie der Pflanzenproduktion eingesetzt werden. Bevorzugt wird sie als Desinfektionsmittel verwendet.

Die folgenden Beispiele sollen die vorliegende Erfindung weiter erläutern, ohne sie dabei einzuschränken.

**Beispiele**

Es wurden Dampfdruckerniedrigung und Gefrierpunktserniedrigung für eine erfindungsgemäße Zusammensetzung (B1) bei einer Temperatur von 20°C bestimmt. Diese erfindungsgemäße Zusammensetzung enthält 96 Gew.-%ige Ameisensäure und 50 Gew.-%ige wässrige Glyoxylsäurelösung als Verbindung V im Gewichtsverhältnis (Ameisensäure:Gyloxylsäurelösung) 80:20.

Als Vergleiche werden reine Ameisensäure (VB1), sowie eine herkömmliche Zusammensetzung (VB2) angeführt, die aus 96 Gew.-%iger Ameisensäure besteht, aber keine Verbindung V enthält. Die kryoskopische Konstante von Ameisensäure beträgt 2,77 und ihr Dampfdruck bei 20°C beträgt 43 hPa. Als Verbindung V wurde Glyoxylsäure als 50 Gew.-%ige Lösung in Wasser verwendet.

Der gemessene absolute Dampfdruck $P_{mess}$ wurde aus dem Versuch (B1) bestimmt und die Dampfdruckerniedrigung $\Delta P_{mess}$ gegenüber reiner Ameisensäure berechnet. Die theoretische Dampfdruckerniedrigung $\Delta P_{theo}$, theoretischer absoluter Dampfdruck $P_{theo}$, Gefrierpunktserniedrigung $\Delta T$ und absoluter Gefrierpunkt T wurden mit Hilfe der Formeln I und II berechnet. Die Ergebnisse sind in Tabelle 1 aufgeführt.

**Tabelle 1**

|  |  | VB1 | VB2 | B1 |
|---|---|---|---|---|
| Ameisensäure | [g/L] | 1220 | 960 | 768 |
| Ameisensäure | [mol/L] | 26,5 | 20,9 | 16,7 |
| Wasser | [g/L] | - | 40 | 132 |
| Wasser | [mol/L] | - | 2,22 | 1,35 |
| Glyoxylsäure | [g/L] | - | - | 100 |
| Glyoxylsäure | [mol/L] | - | - | 7,33 |
| x(Ameisensäure) | | 1,00 | 0,90 | 0,66 |
| b(Wasser) | [mol/kg] | - | 2,22 | 1,35 |
| b(Glyoxylsäure) | [mol/kg] | - | - | 7,33 |
| $P_{mess}$ | [hPa] | - | - | 29,8 |

(fortgesetzt)

|  | | VB1 | VB2 | B1 |
|---|---|---|---|---|
| $\Delta P_{mess}$ | [hPa] | - | - | 13,2 |
| $P_{theo}$ | [hPa] | 43,0 | 38,7 | 28,3 |
| $\Delta P_{theo}$ | [hPa] | - | 4,3 | 14,7 |
| T | [°C] | 8,8 | 2,7 | -15,2 |
| $\Delta T$ | [°C] | - | 6,1 | 24,0 |

**Patentansprüche**

1. Zusammensetzung, welche Ameisensäure und mindestens 6 Gew.-%, bezogen auf die Ameisensäure, mindestens einer Verbindung V, ausgewählt aus der Gruppe, bestehend aus Glyoxylsäure, Thioglyoxylsäure, Oxalsäure, deren Derivaten und Gemischen davon enthält und gegebenenfalls weitere Lösungsmittel und übliche Zusatz- und Hilfsmittel enthält.

2. Zusammensetzung nach Anspruch 1, **dadurch gekennzeichnet, dass** sie mindestens 8 Gew.-%, bezogen auf die Ameisensäure, der Verbindung V enthält.

3. Zusammensetzung nach Anspruch 2, **dadurch gekennzeichnet, dass** sie mindestens 10 Gew.-%, bezogen auf die Ameisensäure, der Verbindung V enthält.

4. Zusammensetzung nach Anspruch 3, **dadurch gekennzeichnet, dass** sie mindestens 12 Gew.-%, bezogen auf die Ameisensäure, der Verbindung V enthält.

5. Zusammensetzung nach einem der Ansprüche 1 bis 4, **dadurch gekennzeichnet, dass** sie Glyoxylsäure oder mindestens eines ihrer Derivate enthält.

6. Zusammensetzung nach Anspruch 5, **dadurch gekennzeichnet, dass** sie Glyoxylsäure enthält.

7. Zusammensetzung nach einem der Ansprüche 1 bis 6, **dadurch gekennzeichnet, dass** sie wenigstens einen Zitrusfruchtsaft oder ein Zitrusfruchtsaftkonzentrat oder Gemische von Zitrusfruchtsäften oder Zitrusfruchtsaftkonzentraten aus der Familie der Rutaceae enthält.

8. Verwendung der Zusammensetzung gemäß einem der Ansprüche 1 bis 7, als Biozid in der Landwirtschaft, der Lebensmittelproduktion, der Lebensmittelverarbeitung und im Gartenbau, sowie der Pflanzenproduktion.

9. Verwendung der Zusammensetzung gemäß Anspruch 8, als Desinfektionsmittel in der Landwirtschaft, der Lebensmittelproduktion, der Lebensmittelverarbeitung und im Gartenbau, sowie der Pflanzenproduktion.

Europäisches
Patentamt

Nummer der Anmeldung

EP 08 00 8765

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | POSCHETTO, LORENZA FERRERO; IKE, ANTHONY; PAPP, TIBOR; MOHN, ULRICH; BOEHM, REINHARD; MARSCHANG, RACHEL E.: "Comparison of the sensitivities of noroviruses and feline calicivirus to chemical disinfection under field-like conditions" APPLIED AND ENVIRONMENTAL MICROBIOLOGY, Bd. 73, Nr. 17, 2007, - 2007 Seiten 5494-5500, XP002490417 * Seite 5495, Zeilen 1-10 * ----- | 1-9 | INV. A01N37/02 A01N37/42 A01N25/18 A01P1/00 |
| X | POROMBKA, DORIS; HERZOG, SIBYLLE; BAUMGAERTNER, WOLFGANG; HERDEN, CHRISTIANE: "Preservation of RNA and destruction of infectivity in microdissected brain tissues of Lewis rats infected with the Borna disease virus" JOURNAL OF VIROLOGICAL METHODS, Bd. 135, Nr. 2, 16. Mai 2006 (2006-05-16), Seiten 247-253, XP002490418 * Seite 248, Zeilen 22-24 * ----- | 1-9 | |
| X | YILMAZ, A.; KALETA, E. F.: "Desinfektionsmittelprüfung bei 20 und 10°C zur Bestimmung der viruziden Wirksamkeit gegen Circoviren" DTW, DEUTSCHE TIERAERZTLICHE WOCHENSCHRIFT, Bd. 111, Nr. 6, 2004, Seiten 248-251, XP009103909 * Zusammenfassung * ----- -/-- | 1-9 | RECHERCHIERTE SACHGEBIETE (IPC) A01N |

Der vorliegende Recherchenbericht wurde für alle Patentansprüche erstellt

| Recherchenort | Abschlußdatum der Recherche | Prüfer |
|---|---|---|
| München | 4. August 2008 | Davies, Maxwell |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................
& : Mitglied der gleichen Patentfamilie, übereinstimmendes Dokument

EPO FORM 1503 03.82 (P04C03)

Europäisches
Patentamt

**EUROPÄISCHER RECHERCHENBERICHT**

Nummer der Anmeldung

EP 08 00 8765

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | YILMAZ, A.; HEFFELS-REDMANN, URSULA; REDMANN, T.: "Untersuchungen zur Bestimmung der viruziden Wirksamkeit von zwei chemischen Desinfektionsmitteln gegen aviäres Influenza A Virus bei verschiedenen Temperaturen" ARCHIV FÜR GEFLUEGELKUNDE, Bd. 68, Nr. 2, 2004, Seiten 50-56, XP009103906 * Seite 50, Spalte 2, Absatz 2 * ----- | 1-9 | |
| X | HAFEZ, H. M.; SCHULZE, D: "Untersuchungen über die Wirksamkeit chemischer Desinfektionsmittel gegen Ornithobacterium rhinotracheale in vitro" ARCHIV FÜR GEFLUEGELKUNDE, Bd. 67, Nr. 4, 2003, Seiten 153-156, XP009103914 * Seite 1, Spalte 2, Absatz 2 * * Zusammenfassung * ----- | 1-9 | |
| X | "Flüssiges Desinfektionsmittel für die Tierhaltung (auch gegen Tierseuchenerreger wirksam)"[Online] 14. September 2005 (2005-09-14), XP002490419 Gefunden im Internet: URL:http://www.vetpharm.uzh.ch/reloader.ht m?tpp/00000000/B80268-X.HTM?inhalt_c.htm> [gefunden am 2008-07-25] * das ganze Dokument * ----- -/-- | 1-9 | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| München | 4. August 2008 | Davies, Maxwell |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

**Europäisches Patentamt**

**EUROPÄISCHER RECHERCHENBERICHT**

Nummer der Anmeldung

EP 08 00 8765

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| P,A | "Venno Vet 1 is the disinfectant for all kinds of animal houses for the responsible user"[Online] XP002490420 Gefunden im Internet: URL:www.menno.de/fileadmin/user_upload/Prospekt_VENNO_VET_1_super_E.pdf> [gefunden am 2008-07-25] * das ganze Dokument * ----- | 1-9 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| München | 4. August 2008 | Davies, Maxwell |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes Dokument

EPO FORM 1503 03.82 (P04C03)